# DEMANDE DE BREVET EUROPEEN

(11) **EP 0 893 187 A1**
(43) Date de publication de la demande: **27.01.1999**
(21) Numéro de dépôt: 98401890.3
(22) Date de dépôt: 24.07.1998
(51) Int. Cl.: B23K 1/20, H01R 43/02

(54) **Procédé pour revêtir une pièce métallique destinée à être Brasée, revêtement utilisé à cet effet et pièce ainsi revêtue**

(30) Priorité: 25.07.1997 FR 9709492
(71) Demandeur: RADIALL, 93116 Rosny-Sous-Bois (FR)
(72) Inventeur: Rivassou, Yves, 38960 St. Etienne De Crossey (FR)
(74) Mandataire: Leszczynski, André

(57) **Abrégé**

Procédé pour revêtir une pièce métallique destinée à être brasée, notamment une pièce de connecteur électrique pour signaux à haute fréquence, selon lequel on applique sur ladite pièce une couche de bronze blanc.

On recouvre la couche de bronze blanc d'abord d'une fine couche de palladium puis d'une fine couche d'or.

## Description

La présente invention concerne un procédé pour revêtir une pièce métallique destinée à être brasée, un revêtement utilisé à cet effet et une pièce métallique ainsi revêtue.

Depuis longtemps, on sait galvaniser des métaux pour les protéger contre la corrosion.

C'est le cas notamment des pièces de conducteurs électriques que l'on a longtemps recouvertes d'une fine couche de nickel.

Le nickel étant un matériau magnétique, il ne convenait pas pour revêtir des pièces de connecteurs électriques, notamment ceux destinés à transmettre des signaux de haute fréquence.

On a alors remplacé le nickel par du bronze préférentiellement du bronze blanc dont l'aspect est proche de celui du nickel et qui est un matériau dont la conductivité électrique est suffisante pour la fonction requise, et dont la dureté protège en outre efficacement les pièces revêtues des frottements qu'elles peuvent subir.

L'inconvénient du bronze blanc non traité est sa médiocre aptitude au brasage.

Pour surmonter cette difficulté, on avait coutume d'utiliser des flux de brasure activés, ce qui permettait d'obtenir des brasures convenables mais nécessitant des opérations de nettoyage à base de CFC (chlorofluorocarbones).

L'usage de tels produits étant maintenant prohibé, les brasures effectuées sur des pièces métalliques revêtues de bronze blanc présentent une moindre qualité qu'auparavant, ce qui peut poser des problèmes de fiabilité des connecteurs.

La présente invention vise à résoudre ce problème en proposant un nouveau procédé pour revêtir une pièce métallique sans dégrader son aptitude au brasage.

La présente invention a pour objet un procédé pour revêtir une pièce métallique destinée à être brasée, notamment un composant électrique, selon lequel on applique sur ladite pièce une couche de bronze blanc, caractérisé par le fait que l'on recouvre la couche de bronze blanc d'abord d'une fine couche de palladium puis d'une fine couche d'or.

Selon l'invention, on entend par fine couche, une couche dont l'épaisseur est de préférence comprise entre 0,1 et 0,2 µm ; la couche d'or pouvant même se limiter à 0,05 µm.

Le procédé selon l'invention fournit ainsi des pièces métalliques aptes au brasage sans traitement postérieur aux CFC, protégées contre la corrosion, présentant une dureté de surface suffisante pour résister à d'éventuels frottements, suffisamment conductrices à leur surface et amagnétiques.

En outre, ces pièces sont durablement protégées, au sens où le revêtement qu'elles comportent ne se dégrade pas ou très lentement au cours du temps.

L'invention a également pour objet un revêtement anti-corrosion, dur, non toxique, amagnétique et brasable pour pièces métalliques, notamment pour composants électriques, caractérisé par le fait qu'il est constitué par :
- une couche de bronze blanc,
- recouverte d'une fine couche de palladium,
- recouverte d'une fine couche d'or.

On entend par non toxique le fait que le revêtement ne contient aucun métal réputé dangereux et que sa mise en oeuvre n'est pas nuisible à l'environnement.

Du fait que ce revêtement se brase facilement, on peut exécuter des brasages à la vague des pièces revêtues avec une grande efficacité et une grande fiabilité.

L'invention a également pour objet une pièce métallique, notamment un composant électrique, revêtue du revêtement décrit ci-dessus.

Ce composant est de préférence une pièce de connecteur électrique, notamment de connecteur électrique haute fréquence.

Pour mieux faire comprendre le procédé selon l'invention, on va en décrire maintenant un mode de mise en oeuvre donné à titre d'exemple non limitatif.

Un corps de connecteur coaxial hautes fréquences muni de picots pour sa fixation et son branchement électrique sur une carte de circuit imprimé est réalisé en laiton.

Il est tout d'abord dégraissé et nettoyé pour éliminer d'éventuelles souillures de sa surface.

On dépose, sur la totalité de sa surface, une très fine couche de cuivre (appelée couche flash) de 0,5 µm afin d'améliorer l'adhérence sur la pièce et dissimuler les autres composants de l'alliage laiton derrière cette couche de cuivre.

On immerge ensuite la pièce dans une cuve de bronze blanc et on la soumet à une électrolyse pendant 10 minutes.

A sa sortie de la cuve, la pièce est recouverte d'une couche de 2 à 3 µm de bronze blanc.

La pièce est ensuite rincée, puis à nouveau immergée sous électrolyse dans un bain de palladium pendant quelques minutes.

La pièce quitte le bain de palladium avec une couche de 0,2 µm de palladium recouvrant la couche de bronze blanc.

La pièce est à nouveau rincée puis immergée sous électrolyse dans un bain d'or selon la même technologie.

A sa sortie du bain d'or, la pièce est revêtue d'une couche d'or de 0,1 µm.

La pièce est ensuite rincée et séchée.

Au cours de ces traitements, l'ensemble de la pièce, y compris ses picots, ont été revêtus.

La pièce est ensuite positionnée sur une carte de circuit imprimé, ses picots traversant des trous éventuellement métallisés de cette carte.

Les extrémités des picots font donc saillie sur l'autre face de la carte.

Leur brasage à la carte est effectué par la technique connue de brasage à la vague qui consiste à placer la carte de circuit imprimé à proximité de la surface d'un bain de brasure et à créer sur cette surface une vague qui progresse en lèchant la carte de circuit imprimé et en mouillant les picots en saillie de cette carte.

On comprend qu'il est particulièrement important que les picots présentent une mouillabilité élevée, ce qui est le cas avec le revêtement selon l'invention, afin que la vague, lors de son passage, n'ait pas tendance à exercer sur les picots une poussée d'Archimède tendant à les repousser, ce qui pourrait déplacer la pièce par rapport à la carte.

Il est bien entendu que le mode de mise en oeuvre qui vient d'être décrit ne présente aucun caractère limitatif et qu'il pourra recevoir toutes modifications désirables sans sortir pour cela du cadre de l'invention.

En particulier, il est clair que l'invention peut s'appliquer à un autre composant électrique, par exemple une antenne ou une partie d'antenne.

## Revendications

1. Procédé pour revêtir une pièce métallique destinée à être brasée, notamment une pièce de connecteur électrique pour signaux à haute fréquence, selon lequel on applique sur ladite pièce une couche de bronze blanc, caractérisé par le fait que l'on recouvre la couche de bronze blanc d'abord d'une fine couche de palladium puis d'une fine couche d'or.

2. Procédé selon la revendication 1, caractérisé par le fait que l'épaisseur de fines couches est comprise entre 0,1 et 0,2 µm ; la couche d'or pouvant même se limiter à 0,05 µm.

3. Revêtement anti-corrosion, dur, non toxique, amagnétique et brasable pour pièces métalliques, notamment pour pièces de connecteur électrique pour signaux à haute fréquence, caractérisé par le fait qu'il est constitué par :
- une couche de bronze blanc,
- recouverte d'une fine couche de palladium,
- recouverte d'une fine couche d'or.

4. Pièce métallique, caractérisée par le fait qu'elle est revêtue du revêtement selon la revendication 3.

5. Pièce métallique selon la revendication 4, caractérisée par le fait qu'elle constitue un composant électrique.

6. Pièce métallique selon la revendication 5, caractérisée par le fait qu'elle constitue une pièce de connecteur électrique.

7. Pièce métallique selon la revendication 6, caractérisée par le fait que le connecteur électrique est destiné à transmettre des signaux de haute fréquence.
